# EUROPÄISCHE PATENTSCHRIFT

(11) **EP 2 937 525 B1**
(45) Veröffentlichungstag und Bekanntmachung des Hinweises auf die Patenterteilung: **01.04.2020**
(21) Anmeldenummer: 15163014.2
(22) Anmeldetag: 09.04.2015
(51) Int. Cl.: F01D 25/30, F01D 25/16

(54) **FLUGTRIEBWERK**
AIRCRAFT ENGINE
MOTEUR D'AÉRONEF

(30) Priorität: 22.04.2014 DE 102014207547
(43) Veröffentlichungstag der Anmeldung: 28.10.2015
(73) Patentinhaber: MTU Aero Engines AG, 80995 München (DE)
(72) Erfinder: Thouault, Nicolas, 81247 München (DE); Hoeger, Martin, 85435 Erding (DE)

(56) Entgegenhaltungen:
- US-A- 4 685 286
- US-A1- 2010 080 697
- US-A1- 2013 219 922

## Beschreibung

Die Erfindung betrifft ein Flugtriebwerk mit einem stromabwärts einer Niederdruckturbine angeordneten Austrittgehäuses und mindestens einem innerhalb eines Ringraums des Austrittgehäuses angeordneten Nachleitrad zur Umlenkung eines drallbehafteten, aus der Niederdruckturbine austretenden Heißgasstroms, wobei das Nachleitrad mindestens eine im Ringraum angeordnete Schaufel mit einer stromaufwärts liegenden Vorderkante umfasst und die Vorderkante in Richtung einer radial außen liegenden Gehäusewand des Austrittgehäuses stromabeilend verlaufend ausgebildet ist.

Die Druckschrift US 2010/0080697 A1 beschreibt eine integrierte Nachleitradanordnung für Turbomaschinen, welche zumindest ein Nachleitrad und zumindest eine Gabelung aufweisen, die eine Anströmkante und eine Hinterkante aufweist. Die Turbomaschine hat eine zentrale Rotationsachse und eine vorgegebene Rotationsrichtung bezüglich der Achse. Die Anströmkante der Gabelung weist einen Pfeilwinkel ungleich Null in Bezug auf eine Linie senkrecht zur zentralen Achse auf.

Die Druckschrift US 2013/0219922 A1 betrifft eine ausgerichtete Gasturbineneinheit mit reduziertem Lüftergeräusch. Ein Lüfterabschnitt für eine Gasturbine weist einen Lüftermotor mit einer Vielzahl von Lüfterflügeln auf. Eine Vielzahl von Ausgangsleitschaufeln ist stromabwärts des Lüfterrotors angeordnet. Der Lüfterrotor wird mithilfe einer Getriebeuntersetzung in Bezug zu einem Turbinenabschnitt angetrieben. Die Ausgangsleitschaufeln sollen ein resultierendes Geräusch aufgrund der Interaktion der Streben mit den Lüfterflügeln entlang der Ausgangsleitschaufeln ermöglichen.

Die Druckschrift US 4,685,286 beschreibt ein Zerlegungsverfahren für eine Gasturbineneinheit. Diese Druckschrift offenbart eine Rotoranordnung für eine Gasturbineneinheit. Die Gasturbine weist einen Kompressionsabschnitt und einen Turbinenabschnitt auf. Es werden verschiedene Konstruktionsdetails dargestellt, die eine modulare Zerlegung des Turbinenabschnitts ermöglichen. Die Rotoranordnung beinhaltet eine Rotorwelle, die sich zwischen dem Kompressionsabschnitt und dem Turbinenabschnitt erstreckt. Eine ringförmige Welle greift in ein Lager ein und ist mit einer Rotorblattanordnung verbunden.

Derartige Nachleiträder (sogenannte TEC Turbine Exit Casing) sind bekannt, so zum Beispiel aus der US 4,685,286 A1. In Flugtriebwerken werden durch den Einbau eines feststehenden Nachleitrads Druckerhöhungen erreicht, indem Drall aus der Abströmung der Heißluft herausgenommen und so der Vortriebswirkungsgrad verbessert wird. Ein Nachleitrad umfasst üblicherweise mehrere Schaufeln, die rückwärtsgepfeilt, d.h. mit einer ausgehend von ihrem radial inneren Ende zu einer radial außen liegenden Gehäusewand des Nachleitrads hin stromabeilenden Vorderkante, ausgebildet sein können. Infolge der Pfeilung werden höhere Verzögerungen an der Triebwerksnabe des Nachleitrads möglich, zudem können aerodynamische Verluste vermindert werden. Nachteilig an bekannten Flugtriebwerken mit einem einer Niederdruckturbine in Strömungsrichtung nachgeschalteten Nachleitrad ist jedoch weiterhin, dass durch die Interaktion zwischen einem letzten Rotor der Niederdruckturbine und dem Nachleitrad eine starke Lärmquelle entsteht, die nachteilig für den Betrieb des Flugtriebwerks insgesamt ist.

Aufgabe der vorliegenden Erfindung ist es daher, ein Flugtriebwerk der eingangs genannten Art zu schaffen, welches sich durch eine verminderte Lärmentwicklung auszeichnet.

Diese Aufgabe wird erfindungsgemäß durch ein Flugtriebwerk mit den Merkmalen des Patentanspruchs 1 gelöst. Vorteilhafte Ausgestaltungen mit zweckmäßigen Weiterbildungen der Erfindung sind in den Unteransprüchen angegeben.

Ein erfindungsgemäßes Flugtriebwerk weist ein stromabwärts einer Niederdruckturbine angeordnetes Austrittgehäuse und ein innerhalb eines Ringraums des Austrittgehäuses angeordnetes Nachleitrad zur Umlenkung eines drallbehafteten, aus der Niederdruckturbine austretenden Heißgasstroms auf, wobei das Nachleitrad mindestens eine im Ringraum angeordnete Schaufel mit einer stromaufwärts liegenden Vorderkante umfasst und die Vorderkante ausgehend von ihrem radial inneren Ende in Richtung einer radial außen liegenden Gehäusewand des Ringraums stromabeilend verlaufend ausgebildet ist. Dabei ist die Vorderkante in einem Winkel ε zwischen 15° und 35° zu einer auf einer senkrecht zu einer Triebwerksachse gebildeten Ebene liegenden Radialen r verlaufend ausgebildet. Der Winkel ε kann beispielweise folgende Werte aufweisen: 15°, 16°, 17°, 18°, 19°, 20°, 21°, 22°, 23°, 24°, 25°, 26°, 27°, 28°, 29°, 30°, 31°, 32°, 33°, 34°, 35° oder entsprechende Zwischenwerte. Überraschenderweise hat sich gezeigt, dass neben den aerodynamischen Vorteilen einer derartigen Ausgestaltung der Vorderkante der Schaufel des Nachleitrads in dem Winkelbereich zwischen 15° und 35°, das heißt bei einer entsprechenden axialen Rückwärtspfeilung des Nachleitrads, es zu einer deutlichen Minderung des durch die Interaktion zwischen dem letzten Rotor der Niederdruckturbine und dem Nachleitrad entstehenden Lärmes kommt. Die erfindungsgemäße Pfeilung der Schaufel des Nachleitrads führt über einen überwiegenden Teil der Vorderkante zu einem vergrößerten Abstand zwischen dem Nachleitrad und dem letzten Turbinenrotor. Dadurch können Störungen besser abklingen, so dass der Lärm der Rotor-Nachleitrad-Interaktion deutlich reduziert werden kann. Der Lärmbeitrag der Niederdruckturbine am Lärm des entsprechenden Flugtriebwerks kann signifikant verringert werden. Da weniger Lärm aus der Niederdruckturbine nach außen dringt, kann prinzipiell die Drehzahl der Niederdruckturbine erhöht werden, ohne das dabei die zulässige Grenze für die Lärmbelastung überschritten wird. Dies führt wiederum zu einer Wirkungsgradsteigerung der Niederdruckturbine und gegebenenfalls zu einer Gewichtsreduzierung der Turbine, da weniger Stufen zur Erzielung vorgegebener Leistungsbereiche benötigt werden. Zudem ergeben sich durch die erfindungsgemäße Pfeilung der mindestens einen Schaufel des Nachleitrads aerodynamische Vorteile, da infolge der nacheilenden Vorderkante Sekundärströmungen reduziert werden. Infolge der rückwärts gerichteten Pfeilung werden zudem höhere Verzögerungen an der Nabe des Triebwerks möglich, sodass insgesamt die Niederdruckturbine des Flugtriebwerks leiser, effizienter und leichter ausgestaltet werden kann. Des Weiteren ist eine effiziente Umlenkung der aus der Niederdruckturbine austretenden Heißgasströmung durch das Nachleitrad gewährleistet. Vorteilhafterweise können sich bei gleichem Nachleitrad-Austrittsquerschnitt geringere Rotorhöhen in der Niederdruckturbine und eine höhere Austrittsmachzahl am Rotor ergeben, wobei wiederum vorteilhafterweise mehr Leistung in der hocheffizienten letzten Stufe der Niederdruckturbine umgesetzt werden kann.

In einer vorteilhaften Ausgestaltung des erfindungsgemäßen Flugtriebwerks beträgt der Winkel ε 20° bis 30°, insbesondere 25°. In diesem Winkelbereich der Pfeilung kann sich eine besonders deutliche Lärmreduzierung ergeben.

Darüber hinaus hat es sich als vorteilhaft herausgestellt, wenn ein Verhältnis einer maximalen axialen Erstreckung zu einer maximalen radialen Erstreckung der wenigstens einen Schaufel des Nachleitrades im Verhältnis zu den aus dem Stand der Technik bekannten Nachleitradschaufeln relativ klein ist, nämlich kleiner als 0,6, vorzugsweise etwa 0,5. Es ist vorgesehen, dass das Verhältnis der maximalen axialen Erstreckung zu der maximalen radialen Erstreckung der wenigstens einen Schaufel des Nachleitrades kleiner als 0,6 ist. Es sei angemerkt, dass die axiale Erstreckung der Schaufel in radialer Richtung, also in einer Richtung orthogonal zur Triebwerksachse, variieren kann. Ebenso kann die radiale Erstreckung der Schaufel in axialer Richtung, also in einer Richtung parallel zur Triebwerksachse, variieren. Indem die Schaufeln im Verhältnis zu ihrer radialen Erstreckung relativ kurz in axialer Richtung ausgebildet sind, kann das Nachleitrad insgesamt relativ kurz ausgebildet werden und benötigt insbesondere nicht mehr axialen Bauraum als herkömmliche Nachleiträder, deren Schaufeln keine Vorderkanten aufweisen, die in einem Winkel zwischen 15° und 35° zu einer auf einer senkrecht zu einer Triebwerksachse gebildeten Ebene liegenden Radialen verlaufend ausgebildet sind.

Um im Wesentlichen dieselben Lasten zwischen radial äußerem Gehäuse und Nabe mit den im Vergleich zu den Schaufeln von herkömmlichen Nachleiträdern filigraner ausgebildeten Schaufeln übertragen zu können, ist es weiterhin vorteilhaft, wenn ein Verhältnis einer Anzahl der Schaufeln des Nachleitrades zu einer Anzahl an Schaufeln eines dem Nachleitrad unmittelbar stromaufwärts benachbarten Rotors der Niederdruckturbine größer als 0,3, vorzugsweise größer als 0,5, weiter bevorzugt größer 0,6 und noch weiter bevorzugt etwa 0,7. Mit anderen Worten weist das Nachleitrad vorzugsweise deutlich mehr Schaufeln auf als der in Strömungsrichtung betrachtete letzte Rotor bzw. die letzte Rotorstufe der Niederdruckturbine des Flugtriebwerks.

Die Schaufeln des Nachleitrades sind frei von Versorgungsleitungen. Die Verwendung von relativ vielen und in axialer Richtung relativ kurz ausgebildeten Schaufeln im Nachleitrad im Vergleich zum Stand der Technik wird insbesondere dadurch begünstigt, dass die Schaufeln des Nachleitrades frei von Versorgungsleitungen sind. Im Stand der Technik sind die Schaufeln des Nachleitrades häufig als Hohlschaufeln ausgebildet, durch welche Versorgungsleitungen, z.B. für die Ölversorgung, geführt sind. Bei dem erfindungsgemäßen Flugtriebwerk können stattdessen die benötigten Versorgungsleitungen durch Leitgitter geführt werden, die stromaufwärts der Niederdruckturbine angeordnet sind, wie zum Beispiel durch das so genannte Turbine Center Frame (TCF) oder Turning Mid Turbine Frame (TMTF). Auf diese Weise können die Schaufeln im Nachleitrad des erfindungsgemäßen Flugtriebwerks kleiner ausgebildet werden, was es ermöglicht, trotz der zuvor beschriebenen Vorteile, die mit der erfindungsgemäßen Rückwärtspfeilung der Vorderkante verbunden sind, den, insbesondere axial, benötigten Bauraum für das Nachleitrad insgesamt nicht oder zumindest nicht wesentlich zu vergrößern oder sogar zu verkleinern.

In einer weiteren vorteilhaften Ausgestaltung des erfindungsgemäßen Flugtriebwerks ist eine Verlaufsachse des Ringraums des Austrittgehäuses von der Niederdruckturbine in Richtung der Triebwerksachse geneigt ausgebildet. Dadurch kann das Austrittgehäuse sowie das Nachleitrad insgesamt kurz ausgebildet werden. Dadurch, dass der Ringraum radial nach innen in Richtung der Triebwerksachse strebt, kann zudem der sich zwischen dem Austrittgehäuse beziehungsweise dem Austrittkanal des Nachleitrads und der Triebwerksachse befindliche Ringraum der Nabe des Flugtriebwerks vorteilhafterweise eingekürzt werden. Unter der "Verlaufsachse des Ringraums" wird dabei eine Achse verstanden, die sich ergibt, wenn in einer die Triebwerksachse umfassenden Schnittebene im Bereich des Ringraums eine Linie zwischen der radial außen liegenden Gehäusewand des Austrittsgehäuses und der radial innen liegenden Gehäusewand des Austrittsgehäuses, welche zusammen den Ringraum in radialer Richtung begrenzen, gezogen wird, wobei die Linie in dieser Schnittebene über die gesamte axiale Länge des Austrittsgehäuses hinweg den gleichen Abstand zwischen der radial außen liegenden Gehäusewand des Austrittsgehäuses und der radial innen liegenden Gehäusewand des Austrittsgehäuses aufweist, und wenn diese Linie anschließend durch eine Mittelgerade approximiert wird. Diese Mittelgerade bildet dann die Verlaufsachse des Ringraums, die dabei stets auf eine spezielle Schnittebene bezogen ist. Über den gesamten Umfang des Ringraums hinweg bilden alle Verlaufsachsen des Ringraums zusammen im Bereich des Ringraums einen Kegelstumpf, der sich entlang der Strömungsrichtung im Bereich des Ringraums verjüngt, da die einzelnen Verlaufsachsen des Ringraums des Austrittgehäuses von der Niederdruckturbine in Richtung der Triebwerksachse in dieser weiteren vorteilhaften Ausgestaltung des erfindungsgemäßen Flugtriebwerks geneigt ausgebildet sind.

In weiteren vorteilhaften Ausgestaltungen des erfindungsgemäßen Flugtriebwerks ist die Schaufel des Nachleitrads im Querschnitt profiliert ausgebildet. Insbesondere kann die Vorderkante der Schaufel abgerundet ausgebildet sein. Vorteilhafterweise kann die Schaufel je nach Anforderungen, insbesondere den aerodynamischen Anforderungen in dem entsprechenden Triebwerksbereich profiliert werden. Dabei ist die Schaufel des Nachleitrades vorzugsweise derart profiliert, dass sie zumindest bereichsweise eine effiziente Umlenkung des Heißgasstroms bewirkt, insbesondere eine Reduzierung des Dralls des Heißgasstroms bewirkt.

In weiteren vorteilhaften Ausgestaltungen des erfindungsgemäßen Flugtriebwerks ist ein radial außen liegendes Ende der Schaufel an einer Innenseite der radial außen liegenden Gehäusewand des Ringraums und/oder ein radial innen liegendes Ende der Schaufel an einer Innenseite einer radial innen liegenden Gehäusewand des Ringraums angeordnet. Dabei können die jeweiligen Enden der Schaufel mit den entsprechenden Innenseiten verbunden und/oder einstückig ausgebildet werden. Üblicherweise sind zudem wenigstens zwei Schaufeln symmetrisch im Ringraum des Austrittgehäuses zur Ausbildung des Nachleitrads angeordnet. Wird das Nachleitrad mit vergleichsweise hohen Schaufelzahlen ausgeführt, ergeben sich kurze Sehnenlängen und schlanke Bauformen, die insbesondere durch die erfindungsgemäße Ausgestaltung der Schaufeln ermöglicht wird.

In weiteren vorteilhaften Ausgestaltungen des erfindungsgemäßen Flugtriebwerks ist der Winkel ε über die gesamte Länge der Vorderkante konstant oder ändert sich abschnittsweise. Dies bedeutet, dass der Winkel der Vorderkante zu einer auf einer senkrecht zur Triebwerksachse gebildeten Ebene liegenden Radialen über die gesamte Länge der Vorderkante gleich bleiben kann oder sich kontinuierlich oder diskontinuierlich ändert. Der Winkel ε liegt dabei aber immer zwischen 15° und 35°. Entsprechend den baulichen und aerodynamischen Gegebenheiten kann die Vorderkante der Schaufel des Nachleitrads vorteilhafterweise variiert und angepasst werden.

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung eines Turbinenaustrittbereichs eines Flugtriebwerks gemäß dem Stand der Technik;
- Fig. 2: eine Prinzipdarstellung eines Turbinenaustrittbereichs eines erfindungsgemäßen Flugtriebwerks;
- Fig. 3: eine Darstellung der Entwicklung der durch die Interaktion zwischen einem letzten Rotor der Niederdruckturbine und dem Nachleitrad entstehenden Schallleistung im Verhältnis zur Größe der Axialpfeilung (Winkel ε) einer Vorderkante einer Schaufel eines Nachleitrads; und
- Fig. 4: einen Querschnitt einer Schaufel eines Nachleitrads des erfindungsgemäßen Flugtriebwerks.

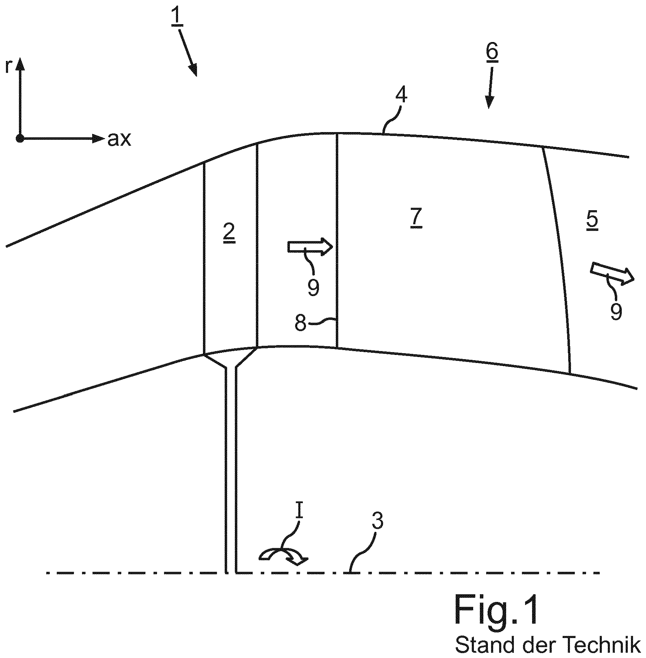

Fig. 1 zeigt eine Prinzipdarstellung eines bekannten Flugtriebwerks im Bereich eines Turbinenaustritts einer Niederdruckturbine 1. Man erkennt einen Ringraum 5 eines Austrittgehäuses 4, der stromab eines letzten Rotors 2 der Niederdruckturbine 1 des Flugtriebwerks angeordnet ist, wobei der Rotor 2 gemäß Pfeil I um eine Drehachse, nämlich die Triebwerksachse 3 rotiert. Die Strömungsrichtung des Betriebsfluids ist mit den Pfeilen 9 gekennzeichnet. Im Ringraum 5 ist ein bekanntes Nachleitrad 6 angeordnet, welches auch als TEC bezeichnet wird. Das Nachleitrad 6 umfasst mehrere ringförmig im Ringraum 5 angeordnete Schaufeln 7, die in Strömungsrichtung 9 betrachtet jeweils eine Vorderkante 8 und eine Hinterkante aufweisen. Man erkennt, dass die Vorderkante 8 in diesem konkreten Beispiel aus dem Stand der Technik ungefähr parallel zu einer auf einer senkrecht zu der Triebwerksachse 3 gebildeten Ebene liegenden Radialen r verläuft. Mit ax wird der Verlauf der axialen Triebwerksachse 3 gekennzeichnet.

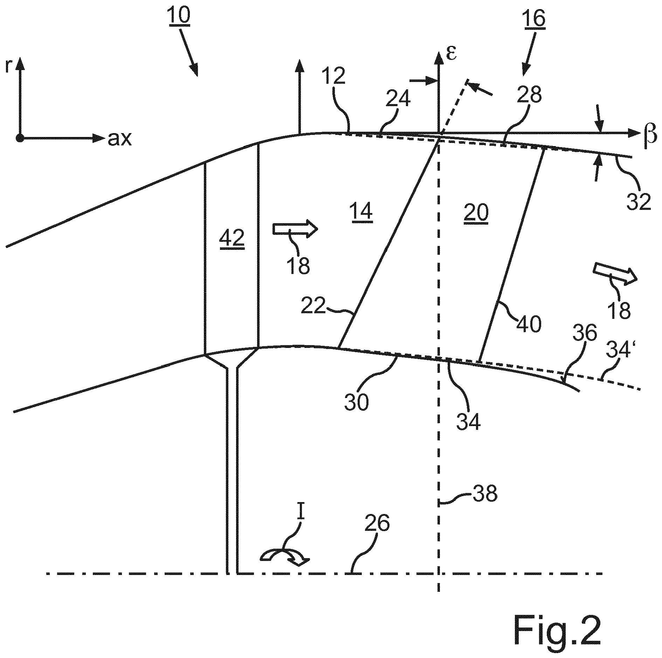

Fig. 2 zeigt eine Prinzipdarstellung eines Turbinenaustrittbereichs eines Flugtriebwerks mit einer Niederdruckturbine 10. Dabei ist ein Rotor 42 der Niederdruckturbine 10 dargestellt. Der Rotor 42 stellt in Strömungsrichtung 18 den letzten Rotor der Niederdruckturbine 10 dar und rotiert gemäß Pfeil I um eine Drehachse, nämlich eine Triebwerksachse 26 des Flugtriebwerks. Des Weiteren erkennt man, dass sich stromabwärts ein Austrittgehäuse 12 an die Niederdruckturbine 10 anschließt, wobei das Austrittgehäuse 12 einen Ringraum 14 umfasst. Der Ringraum 14 bildet den Austrittskanal für den Heißgasstrom 18. Die Strömungsrichtung des Heißgasstroms 18 ist mit entsprechenden Pfeilen gekennzeichnet.

Innerhalb des Ringraums 14 ist ein Nachleitrad 16 zur Umlenkung des drallbehafteten, aus der Niederdruckturbine 10 austretenden Heißgasstroms 18 angeordnet. Das Nachleitrad 16 umfasst dazu mehrere im Ringraum 14 angeordnete Schaufeln 20. Die Schaufeln sind dabei in Umfangsrichtung mit im Wesentlichen gleichen Abständen zueinander bzw. symmetrisch im Ringraum angeordnet (nicht dargestellt). Man erkennt, dass die Schaufel 20 eine stromaufwärts liegende Vorderkante 22 und eine stromabwärts liegende Hinterkante 40 aufweist. Die Vorderkante 22 ist dabei in Richtung einer radial außen liegenden Gehäusewand 24 des Ringraums 14 stromabeilend verlaufend ausgebildet. In dem dargestellten Ausführungsbeispiel ist die Vorderkante 22 in einem Winkel ε zu einer auf einer senkrecht zu der Triebwerksachse 26 gebildeten Ebene 38 liegenden Radialen r verlaufend ausgebildet. Der Winkel ε beträgt in dem dargestellten Ausführungsbeispiel ungefähr 25°. Er kann aber alle Werte zwischen 15° und 35° einnehmen. Die Radiale r zu dem Verlauf ax der axialen Triebwerksachse 26 bildet das Bezugssystem zur Ermittlung des Winkels ε. Die Hinterkante 40 ist in dem dargestellten Ausführungsbeispiel ebenfalls stromabeilend verlaufend ausgebildet. Der Winkel ε ist über die gesamte Länge der Vorderkante 22 konstant ausgebildet. Es ist aber auch möglich, dass sich dieser in dem Wertebereich zwischen 15° und 35° abschnittsweise verändert.

Des Weiteren erkennt man, dass ein radial außen liegendes Ende 28 der Schaufel 20 mit einer Innenseite 32 der radial außen liegenden Gehäusewand 24 des Ringraums 14 verbunden ist. Auch ein radial innen liegendes Ende 30 der Schaufel 20 ist mit einer Innenseite 36 einer radial innen liegenden Gehäusewand 34 des Ringraums 14 verbunden. Unter der Gehäusewand 34 wird im Triebwerksbau üblicherweise die Nabe verstanden. Zudem wird deutlich, dass der Ringraum 14 des Austrittgehäuses 12 von der Niederdruckturbine 10 in Richtung der Triebwerksachse 26 geneigt ausgebildet ist. Dies wird in Fig. 2 durch den Winkel β ausgedrückt, der im Bezugssystem r/ax kleiner 0° ist. Zudem erkennt man, dass die radial innen liegende Gehäusewand 34 bzw. Nabe des Austrittgehäuses 12 aufgrund der Ausgestaltung der Schaufeln 20 des Nachleitrads 16 weiter in Richtung der Triebwerksachse 26 geneigt ausgebildet ist als eine vergleichbare Gehäusewand 34' bzw. Nabe des in Fig. 1 dargestellten Austrittgehäuses 4 eines bekannten Flugtriebwerks.

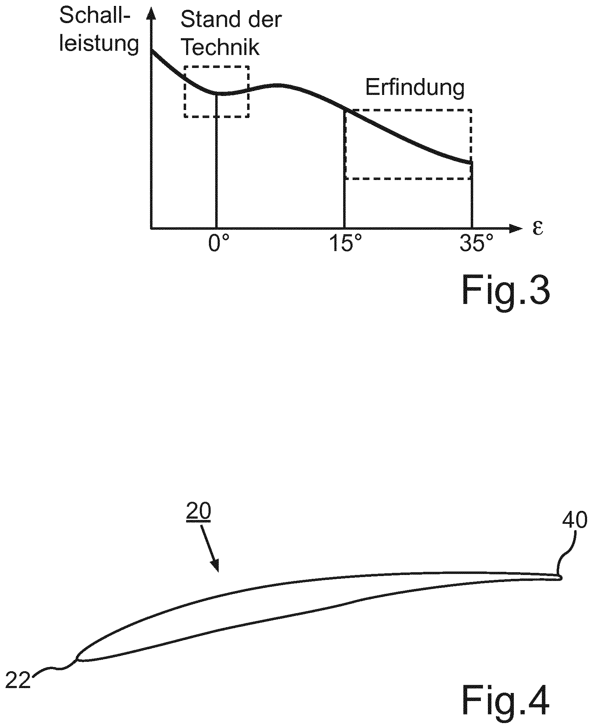

Fig. 3 zeigt eine Darstellung der Entwicklung der durch die Interaktion zwischen dem letzten Rotor 42 der Niederdruckturbine 10 und dem Nachleitrad 16 entstehenden Schallleistung im Verhältnis zur Größe der Axialpfeilung (Winkel ε) der Vorderkante 22 der Schaufel 20 des Nachleitrads 16. Man erkennt, dass es in dem Winkelbereich zwischen 15° und 35° zu einer signifikanten Verminderung der Schallleistung kommt.

Fig. 4 zeigt einen beispielhaften Querschnitt einer Schaufel 20 des Nachleitrads 16. Man erkennt, dass die Vorderkante 22 im Querschnitt abgerundet ausgebildet ist. Entsprechendes gilt für die Hinterkante 40, wobei zudem zwischen der Vorderkante 22 und der Hinterkante 40 im mittleren Bereich die Schaufel 20 im Querschnitt eine Verdickung ausgebildet ist. Zudem erkennt man, dass die Schaufel 20 eine leichte Wölbung aufweist, um den drallbehafteten Heißgasstrom 18 aus der Niederdruckturbine 10 zumindest bereichsweise umzulenken und dabei insbesondere zumindest teilweise den Drall aus dem Heißgasstrom 18 zu nehmen.

Die in den Unterlagen angegebenen Werte zur Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen. Insbesondere sind Abweichungen von ±10 % des betreffenden Werts als von der Offenbarung mitumfasst anzusehen.

### Bezugszeichenliste

- 1: Niederdruckturbine
- 2: Rotor
- 3: Triebwerksachse
- 4: Austrittsgehäuse
- 5: Ringraum
- 6: Nachleitrad
- 7: Schaufel
- 8: Vorderkante
- 9: Heißgasstrom
- 10: Niederdruckturbine
- 12: Austrittsgehäuse
- 14: Ringraum
- 16: Nachleitrad
- 18: Heißgasstrom
- 20: Schaufel
- 22: Vorderkante
- 24: Gehäusewand
- 26: Triebwerksachse
- 28: Schaufelende
- 30: Schaufelende
- 32: Innenseite
- 34: Gehäusewand
- 36: Innenseite
- 38: senkrecht zur Triebwerksachse gebildete Ebene
- 40: Hinterkante
- 42: Rotor
- ax: Verlauf Triebwerksachse
- r: Radiale

## Patentansprüche

1. Flugtriebwerk mit einem stromabwärts einer Niederdruckturbine (10) angeordneten Austrittgehäuse (12) und mindestens einem innerhalb eines Ringraums (14) des Austrittgehäuses (12) angeordneten Nachleitrad (16) zur Umlenkung eines drallbehafteten, aus der Niederdruckturbine (10) austretenden Heißgasstroms (18), wobei das Nachleitrad (16) mindestens eine im Ringraum (14) angeordnete Schaufel (20) mit einer stromaufwärts liegenden Vorderkante (22) umfasst und die Vorderkante (22) ausgehend von ihrem radial inneren Ende in Richtung einer radial außen liegenden Gehäusewand (24) des Austrittgehäuses (14) stromabeilend verlaufend ausgebildet ist,
**dadurch gekennzeichnet, dass**
die Vorderkante (22) in einem Winkel ε zwischen 15° und 35° zu einer auf einer senkrecht zu einer Triebwerksachse (26) gebildeten Ebene (38) liegenden Radialen r, verlaufend ausgebildet ist,
die Schaufeln (20) des Nachleitrades (16) frei von Versorgungsleitungen sind und
ein Verhältnis einer maximalen axialen Erstreckung zu einer maximalen radialen Erstreckung der wenigstens einen Schaufel (20) des Nachleitrades (16) kleiner als 0,6 ist.

2. Flugtriebwerk nach Anspruch 1,
**dadurch gekennzeichnet, dass**
der Winkel ε 20° bis 30°, insbesondere 25°, beträgt.

3. Flugtriebwerk nach Anspruch 1 oder 2,
**dadurch gekennzeichnet, dass** ein Verhältnis einer maximalen axialen Erstreckung zu einer maximalen radialen Erstreckung der wenigstens einen Schaufel (20) des Nachleitrades (16) etwa 0,5 ist.

4. Flugtriebwerk nach einem der vorhergehenden Ansprüche,
**dadurch gekennzeichnet, dass** ein Verhältnis einer Anzahl der Schaufeln (20) des Nachleitrades (16) zu einer Anzahl an Schaufeln eines dem Nachleitrad (16) unmittelbar stromaufwärts benachbarten Rotors (42) der Niederdruckturbine (10) größer als 0,3 ist, vorzugsweise größer als 0,5, weiter bevorzugt größer 0,6 und noch weiter bevorzugt etwa 0,7.

5. Flugtriebwerk nach einem der vorhergehenden Ansprüche,
**dadurch gekennzeichnet, dass**
eine Verlaufsachse des Ringraums (14) des Austrittgehäuses (12) von der Niederdruckturbine (10) in Richtung der Triebwerksachse (26) geneigt ausgebildet ist.

6. Flugtriebwerk nach Anspruch 5,
**dadurch gekennzeichnet, dass**
im Bezugssystem der Radialen r zu einem Verlauf ax der Triebwerksachse (26) ein Neigungswinkel β der Verlaufsachse des Ringraums (14) des Austrittgehäuses (12) kleiner 0° ist.

7. Flugtriebwerk nach einem der vorhergehenden Ansprüche,
**dadurch gekennzeichnet, dass**
die Schaufel (20) im Querschnitt profiliert ausgebildet ist.

8. Flugtriebwerk nach Anspruch 7,
**dadurch gekennzeichnet, dass**
die Vorderkante (22) der Schaufel (20) abgerundet ausgebildet ist.

9. Flugtriebwerk nach einem der vorhergehenden Ansprüche,
**dadurch gekennzeichnet, dass**
ein radial außen liegendes Ende (28) der Schaufel (20) an einer Innenseite (32) der radial außen liegenden Gehäusewand (24) des Austrittgehäuses (14) und/oder ein radial innen liegendes Ende (30) der Schaufel (20) an einer Innenseite (36) einer radial innen liegenden Gehäusewand (34) des Austrittgehäuses (14) angeordnet ist.

10. Flugtriebwerk nach einem der vorhergehenden Ansprüche,
**dadurch gekennzeichnet, dass**
wenigstens zwei Schaufeln (20) symmetrisch im Ringraum (14) zur Ausbildung des Nachleitrads (16) angeordnet sind.

11. Flugtriebwerk nach einem der vorhergehenden Ansprüche,
**dadurch gekennzeichnet, dass**
der Winkel ε über die gesamte Länge der Vorderkante (22) konstant ist oder sich abschnittsweise verändert.

## Claims

1. Aircraft engine comprising an outlet housing (12) arranged downstream of a low-pressure turbine (10) and at least one guide wheel (16) arranged within an annular space (14) of the outlet housing (12) for deflecting a swirling hot gas stream (18) emerging from the low-pressure turbine (10), the guide wheel (16) comprising at least one blade (20) which is arranged in the annular space (14) and has an upstream leading edge (22), and the leading edge (22) being designed to extend downstream starting from its radially inner end in the direction of a radially outer housing wall (24) of the outlet housing (14), **characterized in that** the leading edge (22) is formed at an angle ε of between 15° and 35° with respect to a radial line r that lies on a plane (38) that is formed perpendicularly to an engine axis (26), and the blades (20) of the guide wheel (16) are free of supply lines and a ratio of a maximum axial extension to a maximum radial extension of the at least one blade (20) of the guide wheel (16) is less than 0.6.

2. Aircraft engine according to claim 1, **characterized in that** the angle ε is from 20° to 30°, in particular 25°.

3. Aircraft engine according to claim 1 or 2, **characterized in that** a ratio of a maximum axial extension to a maximum radial extension of the at least one blade (20) of the guide wheel (16) is approximately 0.5.

4. Aircraft engine according to one of the preceding claims, **characterized in that** a ratio of a number of the blades (20) of the guide wheel (16) to a number of blades of a rotor (42) of the low-pressure turbine (10) that is immediately upstream of the guide wheel (16) is greater than 0.3, preferably greater than 0.5, more preferably greater than 0.6, and even more preferably approximately 0.7.

5. Aircraft engine according to one of the preceding claims, **characterized in that** a course axis of the annular space (14) of the outlet housing (12) is designed to be inclined from the low-pressure turbine (10) in the direction of the engine axis (26).

6. Aircraft engine according to claim 5, **characterized in that**, in the reference system of the radial line r with respect to a course ax of the engine axis (26), an angle of inclination β of the course axis of the annular space (14) of the outlet housing (12) is less than 0°.

7. Aircraft engine according to one of the preceding claims, **characterized in that** the blade (20) is profiled in cross section.

8. Aircraft engine according to claim 7, **characterized in that** the leading edge (22) of the blade (20) is rounded.

9. Aircraft engine according to one of the preceding claims, **characterized in that** a radially outer end (28) of the blade (20) is arranged on an inner side (32) of the radially outer housing wall (24) of the outlet housing (14) and/or a radially inner end (30) of the blade (20) is arranged on an inner side (36) of a radially inner housing wall (34) of the outlet housing (14).

10. Aircraft engine according to one of the preceding claims, **characterized in that** at least two blades (20) are arranged symmetrically in the annular space (14) to form the guide wheel (16).

11. Aircraft engine according to one of the preceding claims, **characterized in that** the angle ε is constant over the entire length of the leading edge (22) or changes in portions.

## Revendications

1. Moteur d'aéronef comprenant un carter d'échappement (12) disposé en aval d'une turbine basse pression (10) et au moins une roue de post-rotation (16) disposée dans un espace annulaire (14) du carter d'échappement (12) pour dévier un courant de gaz chaud tourbillonnant (18) sortant de la turbine basse pression (10), la roue de post-rotation (16) comprenant au moins une aube (20) disposée dans l'espace annulaire (14) et comportant un bord avant (22) se trouvant en amont, et le bord avant (22) étant conçu pour s'étendre, à partir de son extrémité radialement intérieure, en aval en direction d'une paroi de boîtier (24) radialement extérieure du carter d'échappement (14), **caractérisé en ce que** le bord avant (22) est réalisé pour s'étendre selon un angle ε compris entre 15 et 35° par rapport à une radiale r, se trouvant sur un plan (38) formé perpendiculairement à un axe de moteur (26), les aubes (20) de la roue de post-rotation (16) sont exemptes de conduites d'alimentation, et **en ce qu'**un rapport entre une extension axiale maximale et une extension radiale maximale de l'au moins une aube (20) de la roue de post-rotation (16) est inférieur à 0,6.

2. Moteur d'aéronef selon la revendication 1, **caractérisé en ce que** l'angle ε est de 20 à 30°, en particulier de 25°.

3. Moteur d'aéronef selon la revendication 1 ou 2, **caractérisé en ce qu'**un rapport entre une extension axiale maximale et une extension radiale maximale de l'au moins une aube (20) de la roue de post-rotation (16) est d'environ 0,5.

4. Moteur d'aéronef selon l'une des revendications précédentes, **caractérisé en ce qu'**un rapport entre un nombre d'aubes (20) de la roue de post-rotation (16) et un nombre d'aubes d'un rotor (42) de la turbine basse pression (10) se trouvant immédiatement en amont de la roue de post-rotation (16) est supérieur à 0,3, de préférence supérieur à 0,5, plus préférablement supérieur à 0,6 et mieux encore d'environ 0,7.

5. Moteur d'aéronef selon l'une des revendications précédentes, **caractérisé en ce qu'**un essieu avant de l'espace annulaire (14) du carter d'échappement (12) est incliné par rapport à la turbine basse pression (10) dans la direction de l'axe de moteur (26).

6. Moteur d'aéronef selon la revendication 5, **caractérisé en ce que**, dans le système de référence des radiales r par rapport à un essieu avant de l'axe de moteur (26), un angle d'inclinaison β de l'essieu avant de l'espace annulaire (14) du carter d'échappement (12) est inférieur à 0°.

7. Moteur d'aéronef selon l'une des revendications précédentes, **caractérisé en ce que** l'aube (20) est profilée en section transversale.

8. Moteur pour aéronef selon la revendication 7, **caractérisé en ce que** le bord avant (22) de l'aube (20) est arrondi.

9. Moteur d'aéronef selon l'une des revendications précédentes, **caractérisé en ce qu'**une extrémité radialement extérieure (28) de l'aube (20) est disposée sur un côté intérieur (32) de la paroi de carter (24) radialement extérieure du carter d'échappement (14) et/ou **en ce qu'**une extrémité radialement intérieure (30) de l'aube (20) est disposée sur un côté intérieur (36) d'une paroi de carter radialement intérieure (34) du carter d'échappement (14).

10. Moteur d'aéronef selon l'une des revendications précédentes, **caractérisé en ce qu'**au moins deux aubes (20) sont disposées symétriquement dans l'espace annulaire (14) pour former la roue de post-rotation (16).

11. Moteur d'aéronef selon l'une des revendications précédentes, **caractérisé en ce que** l'angle ε est constant sur toute la longueur du bord avant (22) ou varie par sections.
